# EUROPEAN PATENT SPECIFICATION

(11) **EP 3 415 457 B1**
(45) Date of publication and mention of the grant of the patent: **24.02.2021**
(21) Application number: 18177805.1
(22) Date of filing: 14.06.2018
(51) Int. Cl.: F16H 25/24, B66B 9/02

(54) **ARRANGEMENT FOR MOVING AN ELEVATOR PLATFORM BETWEEN DIFFERENT LEVELS**
ANORDNUNG ZUM BEWEGEN EINER AUFZUGSPLATTFORM ZWISCHEN VERSCHIEDENEN EBENEN
DISPOSITIF POUR DÉPLACER UNE PLATE-FORME ÉLÉVATRICE ENTRE DIFFÉRENTS NIVEAUX

(30) Priority: 14.06.2017 SE 1750757
(43) Date of publication of application: 19.12.2018
(73) Proprietor: Aritco Lift AB, 196 21 Kungsängen (SE)
(72) Inventor: LINDBLOM, Christian, 196 21 KUNGSÄNGEN (SE); THÅRLIN, Bengt-Åke, 196 21 KUNGSÄNGEN (SE)
(74) Representative: AWA Sweden AB

(56) References cited:
- CN-A- 102 367 861
- JP-U- S63 116 480
- US-A1- 2009 235 769

## Description

### Technical field

The present invention relates to an arrangement for moving an elevator platform between different levels.

### Background

Elevators are frequently used to move persons and / or different types of goods between different levels or floors in a building. The movement of the elevator platform can be achieved with different technical solutions. One arrangement for generating the desired movement comprises an elongated threaded screw arranged substantially vertical in the elevator shaft and a corresponding nut arranged on the screw. The elevator platform is supported by the nut and an electrical motor is arranged to rotate the nut such that the nut, and elevator platform, are moved along the screw US2009235769, which discloses the features of the preamble of claim 1, and JPS63116480U both disclose prior art arrangements.

When the distance between the levels of the different floors the elevator is serving is big, the elongated threaded screw is divided into a number of screw sections in order to facilitate transportation and installation of the threaded screw in the elevator shaft.

Unfortunately, even though the different sections of the threaded screw are produced with high precision, it is almost impossible to achieve a perfect fit between the threads of adjacent screw sections. Even a small angular miss alignment between adjacent screw sections will cause an irregularity in the threads around the screw. When the nut is moving along the threaded screw, the leading end of the threads in the nut will run into the irregularity thereby generating an unpleasant sound and a bump that is transferred to the elevator platform and people standing on the platform.

It is therefore a need to reduce the impact from the irregularity between adjacent screw sections, i.e. the sound and bump that is transferred to the elevator platform, generated in this type of arrangement.

### Summary of the invention

The present invention relates to an arrangement for moving an elevator platform between different levels within an elevator shaft that to at least some extent eliminates, or reduces, the drawbacks mentioned above. Preferable embodiments are defined in the dependent claims.

The arrangement according to the invention comprises:
an elongated screw arranged substantially vertical in said elevator shaft, said screw comprising at least two screw sections joined together and threads arranged around the peripheral surface along the at least two screw sections;
a nut turnably arranged on the elongated screw, said nut is arranged to support the elevator platform, said nut comprises an upper end and a lower end and internal threads corresponding to the threads on the screw extending between the upper and lower end of the nut; and
an electrical motor arranged to rotate the nut to move the nut, and the elevator platform, between the different levels along the screw,
wherein the load from the elevator platform is supported by a flank of the thread in the nut that is facing downwards and a flank of the thread of the screw that is facing upwards, and a section of the flank of the thread in the nut that is facing downwards in the upper and / or lower end of the nut is angled such that a space between the flank of the thread of the screw that is facing upwards and the flank of the thread in the nut facing downwards is formed.

The arrangement according to the invention is based on the idea of modifying the load supporting flank of the threads in the nut, i.e. the angled section, such that a smoother interaction between the threads on the screw and the threads in the nut is generated and thereby reduce the impact from the irregularities in the threads at the joint between adjacent screw sections. The arrangement according to the invention reduces the impact from the irregularity in the joint and consequently the unpleasant sound and bump that is transferred to the elevator platform and people standing on the platform when the nut is passing the joint between adjacent screw sections.

According to one embodiment of the arrangement, the space between the flank of the thread of the screw that is facing upwards and the flank of the thread in the nut facing downwards is tapered in the direction from the upper and/or lower end of the nut. This embodiment provides the desired smooth interaction between the thread on the screw and the thread in the nut when the nut is moving around the screw and the angled section is moved along the irregularity in the threads of the screw.

According to one embodiment of the arrangement, the angled section of the flank of the thread in the nut that is facing downwards extends along at least 1/32 of the circumference of the nut.

According to one embodiment of the arrangement, the angled section of the flank of the thread in the nut that is facing downwards extends along at least 1/16 of the circumference of the nut.

According to one embodiment of the arrangement, the angled section of the flank of the thread in the nut that is facing downwards extends along at least 1/8 of the circumference of the nut.

According to one embodiment of the arrangement, the angled section of the flank of the thread in the nut that is facing downwards extends along at least 1/4 of the circumference of the nut.

According to one embodiment of the arrangement, the angled section of the flank of the thread in the nut that is facing downwards extends along at least 1/2 of the circumference of the nut

According to one embodiment of the arrangement, the distance (d) between the flank of the external thread on the screw that is facing upwards and the flank of the thread in the nut that is facing downwards in the upper and/or lower end of the nut is within the range of 0.04 mm to 1.0 mm. This embodiment further improves the arrangement since a gap at the end, or ends, of the nut in combination with the angled section provides the desired smooth interaction with the irregularities in the thread on the screw. This embodiment ensures that the irregularities are able to enter the space between the flank of the external thread on the screw that is facing upwards and the flank of the thread in the nut that is facing downwards before getting in contact with the thread in the nut.

According to one embodiment of the arrangement, the angled section in the flank of the thread in the nut that is facing downwards is substantially straight, or curved, such that the distance between the flank of the external thread on the screw that is facing upwards and the flank of the thread in the nut that is facing downwards decreases along the angled section in the direction from the upper and/or lower end of the nut.

According to one embodiment of the arrangement, a curved transition surface is formed between the angled section and the thread in the nut that is facing downwards. This embodiment is very favorable since the transition surface reduces the risk that unpleasant vibrations or sound is generated by the small irregularity between the angled section and the flank of the thread in the nut that is facing downwards.

Further scopes of applicability of the present invention will become apparent from the detailed description given below. However, it should be understood that the detailed description and specific examples, while indicating preferred embodiments of the invention, are given by way of illustration only, since various changes and modifications within the scope of the invention will become apparent to those skilled in the art from this detailed description.

Hence, it is to be understood that this invention is not limited to the particular component parts of the device described. It is also to be understood that the terminology used herein is for purpose of describing particular embodiments only, and is not intended to be limiting. It must be noted that, as used in the specification and the appended claim, the articles "a," "an," "the," and "said" are intended to mean that there are one or more of the elements unless the context clearly dictates otherwise. Thus, for example, reference to "a unit" or "the unit" may include several devices, and the like. Furthermore, the words "comprising", "including", "containing" and similar wordings does not exclude other elements or steps.

### Brief Description of the Drawings

The arrangement according to the present invention is schematically illustrated in the appended figures.
Fig. 1 illustrates a perspective schematic view of an elevator platform and the arrangement according the invention.
Fig. 2 illustrates an elongated screw comprising two screw sections joined together and the possible irregularity that often is the result in the joint between the two sections.
Fig. 3 illustrates a known arrangement for moving an elevator platform between different levels.
Fig. 4 illustrates the screw and nut of the arrangement according to the present invention in perspective.
Fig. 5 illustrates a section of an internal thread in the nut, and a corresponding thread from the screw in broken lines within the thread in the nut to more clearly illustrate the general idea of the invention.

### Detailed description

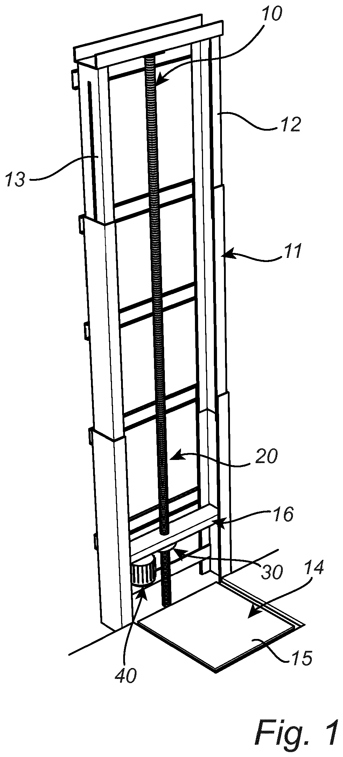

Elevators are used in many building structures to facilitate movement of peoples and goods between different levels. In figure 1 selected parts of an elevator arranged in an elevator shaft is illustrated.

The elevator 10 comprises a support structure 11 installed in the building structure. The support structure extends substantially vertically between the lower and the upper level the elevator is intended to serve. The support structure comprises two substantially straight guide rails 12, 13 that guide the elevator platform 14 during movement between the different levels. The guide rails are preferably secured in the building structure to provide the desired rigidity to the installation.

The illustrated elevator platform 14 is arranged at the lower level and comprises a substantially flat platform floor 15 and a platform support 16 that is extending in vertical direction from the platform floor between the two guide rails of the support structure.

The elevator platform 14 is movably arranged in vertical direction and the movement is generated by a vertically arranged screw 20 arranged between the two guide rails of the support structure, a corresponding nut 30 and an electrical motor 40 arranged on the platform support to rotate the nut around the elongated screw to move the elevator platform along the screw to the different levels. The electrical motor rotates the nut to move the elevator platform along the screw and stops the rotation at the selected level. The elevator furthermore comprises a braking arrangement that is intended to ensure that the elevator platform remains at the selected level even though the electrical motor is turned off.

The elevator comprises a number of different components such as for example user interface for the operator to start and select the desired level, control units, cables for powering the electrical motor etc. that are not illustrated in the schematic illustration but these components are well known within this technical field and not relevant for the present invention.

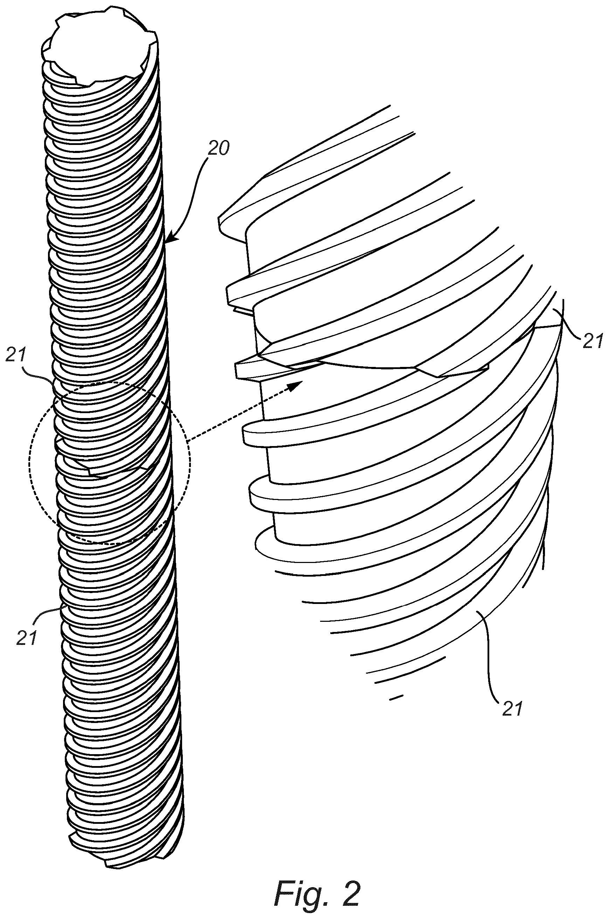

The elongated screw will have a considerable length and is therefore divided into at least two screw sections 21 to make it easier to deliver and install the screw in the elevator shaft. The screw sections 21 are produced with high precision but it is almost impossible to achieve a perfect fit between the threads of adjacent screw sections 21. Even a small angular miss alignment between adjacent screw sections will cause an irregularity in the threads which is illustrated in figure 2 where the area of the screws where adjacent sections meet is enlarged to more clearly illustrate the irregularity. The screw sections 21 could be joined together in different ways like for example a male-female configuration comprising a threaded section extending from the end surface of one screw section and a corresponding recess with internal threads formed in the end surface of the adjacent screw section.

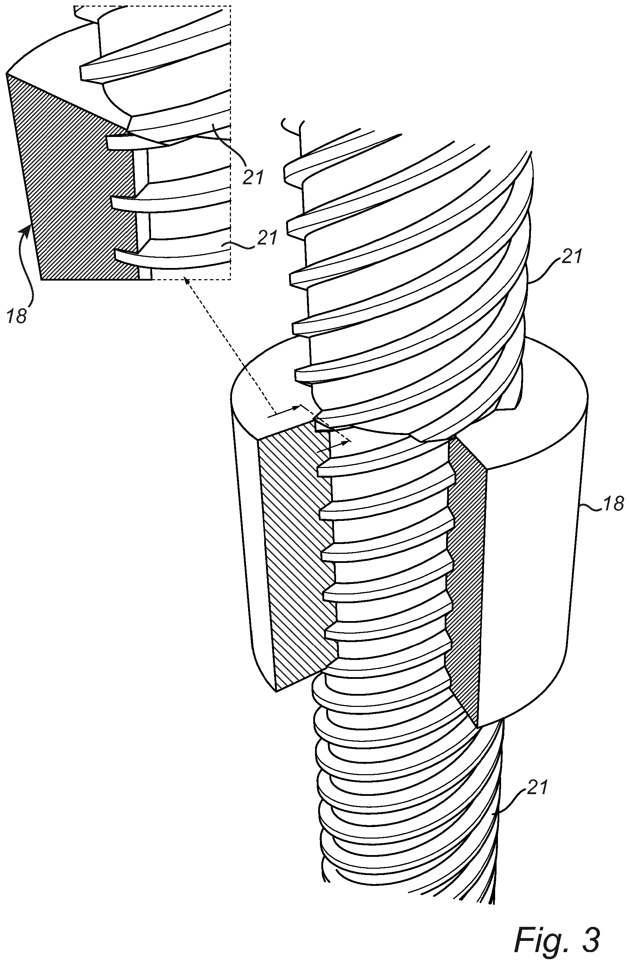

In existing elevators where the elongated screw is used in combination with a conventional nut 18, illustrated in figure 3, the leading end of the threads in the nut 18 will run into the irregularity thereby generating an unpleasant bump that is transferred to the elevator platform, and people standing on the platform. The irregularity may also generate an unpleasant sound that is transferred to the elevator when the nut is passing the joint.

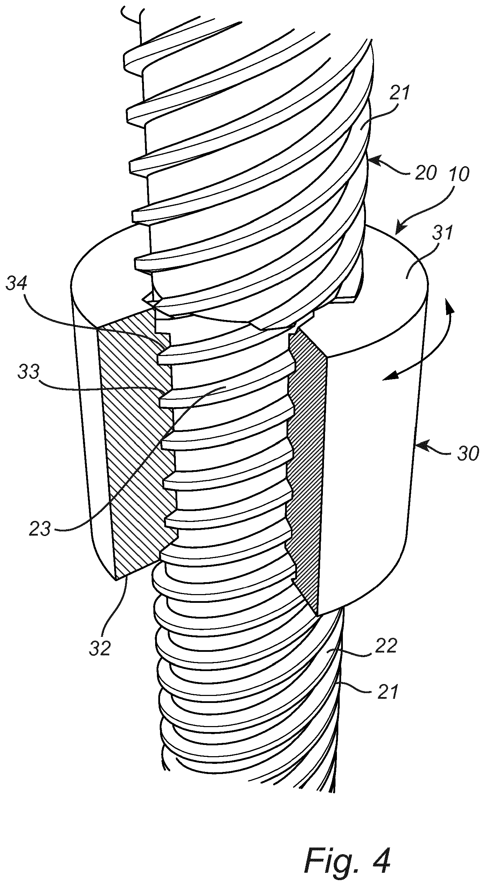

In figure 4, the elongated screw 20 and a nut 30 according to the present invention are illustrated. The elongated screw 20 has the same design as in already existing arrangements for elevators and comprises at least two screw sections 21 joined together. The screw has external threads 22 with the same pitch along the entire screw 20. The pitch could however be selected to adapt the speed that the nut, and the elevator platform, is moved with along the elongated screw at different rotational speeds of the electrical motor.

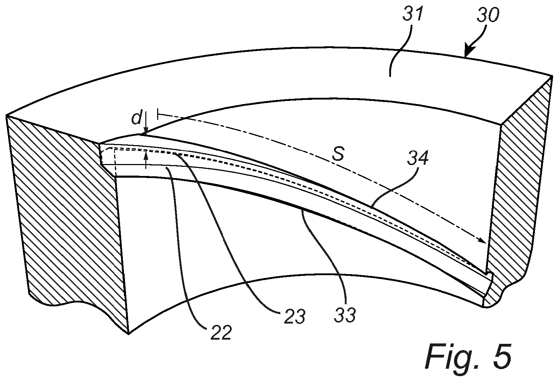

The nut 30 is turnably arranged on the elongated screw and comprises an upper end 31, a lower end 32 and internal threads 33 corresponding to the threads 22 on the screw 20 extending between the upper and lower end of the nut. The load from the elevator platform is supported by the flank 34 of the thread 33 in the nut 30 that is facing downwards and the flank 23 of the thread 22 on the screw 20 that is facing upwards, and in order to achieve a more smooth interaction between the nut and the possible irregularity in the thread of the screw, a section S (illustrated in figure 5) of the flank 34 in the upper end 31 of the nut 30 that is facing downwards is angled such that a space between the flank 23 of the thread 22 on the screw 20 that is facing upwards and the flank 34 of the thread 33 in the nut 30 that is facing downwards is formed.

An identical angled section is preferably formed also in the lower end 32 of the nut 30 such that a similar space between the flank 23 of the thread on the screw that is facing upwards and the flank 34 of the thread in the lower end of the nut that is facing downwards is formed to achieve the desired smooth interaction between the nut and the possible irregularity in the thread of the screw when the leading end of the thread in the nut is in the lower end of the nut during movement downwards along the screw.

The general idea behind the claimed invention is to generate a tapered space between the angled section and the thread of the screw that is big enough to allow the irregularity to enter the thread in the nut without getting in contact with the upper 31 or lower 32 end of the nut thereby eliminating, or at least reducing, the risk for the unpleasant sounds and bumps that are transferred to the elevator platform when the nut crosses the joint between adjacent screw sections.

In figure 5, the arrangement according to the invention is illustrated in more detail to more clearly illustrate the general idea of the invention. In figure 5 only the upper part of the nut 30 and one thread 33 is illustrated to more clearly illustrate the angled section S and the extension of the angled section S within the nut 30. In figure 5, the position of the corresponding thread 22 of the screw is illustrated in broken lines to further illustrate the space that is generated between the flank of the thread on the screw that is facing upwards and the flank of the thread in the nut that is facing downwards. The angled section in the flank of the thread that is facing downwards is substantially straight, alternatively slightly curved, such that the distance d between the flank of the external thread on the screw that is facing upwards and the flank of the thread in the nut that is facing downwards decreases along the section in the direction from the upper 31 and lower end 32 of the nut.

In the illustrated embodiment of the arrangement, the space between the flank of the thread on the screw that is facing upwards and the flank of the thread in the nut that is facing downwards has a tapered form in the direction from upper end 31 of the nut 30 and preferable the same design is used in the lower end 32 of the nut.

The length of the angled section S around the periphery of the screw 20 is adapted to the expected size of the irregularity in the threads of the screw. A longer angled section S will have a higher possibility to generate the desired smoot interaction between the threads in the nut and an irregularity than an angled section extending a shorter distance around the circumference of the screw. Preferably the thread in the nut and the angled section meet in a curved transition surface such that is formed between the angled section and the thread in the nut

Furthermore, the distance d between the flank of the external thread on the screw that is facing upwards and the flank of the thread in the nut that is facing downwards at the upper end, and preferably also the lower end, of the nut in the direction substantially perpendicular to surface of the externa thread on the screw is within the range of 0.04 mm to 1.0 mm. A distance d within this range make it possible for the expected size of the irregularities to enter the nut without generating an unpleasant sound and a bump.

The scope of protection of the claimed invention should however not be limited to the embodiments described above that all could be combined in different ways without departing from the scope of protection defined by the appended claims. The arrangement not according to the invention is also usable if the elongated screw is rotated and the nut maintained still to achieve the desired movement of the elevator platform within the elevator shaft.

## Claims

1. Arrangement for moving an elevator platform (14) between different levels within an elevator shaft, said arrangement comprising:
an elongated screw (20) arranged substantially vertical in said elevator shaft, said screw comprising threads (22) arranged around the peripheral surface
a nut (30) turnably arranged on the elongated screw (20), said nut is arranged to support the elevator platform, said nut comprises an upper end (31) and a lower end (32) and internal threads (33), corresponding to the threads on the screw, extending between the upper and lower end of the nut; and
an electrical motor (40) arranged to rotate the nut to move the nut, and the elevator platform, between the different levels along the screw,
wherein the load from the elevator platform is supported by a flank (34) of the thread (33) in the nut (30) that is facing downwards and a flank (23) of the thread of the screw (20) that is facing upwards, **characterised in that** said screw comprises at least two screw sections (21) joined together and **in that** the threads (22) are arranged around the peripheral surface along the at least two screw sections (21); and **in that** a section (S) of the flank (34) of the thread (33) in the nut that is facing downwards in the upper and / or lower end of the nut is angled such that a space between the flank (23) of the thread (22) of the screw (20) that is facing upwards and the flank (34) of the thread (33) in the nut facing downwards is formed.

2. Arrangement according to claim 1, wherein the space between the flank (23) of the thread of the screw (20) that is facing upwards and the flank (34) of the thread (33) in the nut facing downwards is tapered in the direction from the upper and/or lower end of the nut.

3. Arrangement according to claim 1 or 2, wherein the angled section of the flank (34) of the thread (33) in the nut that is facing downwards extend along at least 1/32 of the circumference of the nut.

4. Arrangement according to claim 1 or 2, wherein the angled section of the flank (34) of the thread (33) in the nut that is facing downwards extend along at least 1/16 of the circumference of the nut.

5. Arrangement according to claim 1 or 2, wherein the angled section of the flank (34) of the thread (33) in the nut that is facing downwards extend along at least 1/8 of the circumference of the nut.

6. Arrangement according to claim 1 or 2, wherein the angled section of the flank (34) of the thread (33) in the nut that is facing downwards extend along at least 1/4 of the circumference of the nut.

7. Arrangement according to claim 1 or 2, wherein the angled section of the flank (34) of the thread (33) in the nut that is facing downwards extend along at least 1/2 of the circumference of the nut

8. Arrangement according to anyone of the previous claims, wherein the distance (d) between the flank of the external thread on the screw that is facing upwards and the flank of the thread in the nut that is facing downwards in the upper and/or lower end of the nut is within the range of 0.04 mm to 1.0 mm.

9. Arrangement according to anyone of the previous claims, wherein the angled section in the flank of the thread in the nut that is facing downwards is substantially straight, or curved, such that the distance between the flank of the external thread on the screw that is facing upwards and the flank of the thread in the nut that is facing downwards decreases along the angled section in the direction from the upper and/or lower end of the nut.

10. Arrangement according to anyone of the previous claims, wherein a curved transition surface is formed between the angled section and the thread in the nut that is facing downwards.

## Patentansprüche

1. Anordnung zum Bewegen einer Aufzugsplattform (14) zwischen verschiedenen Ebenen innerhalb eines Aufzugsschachtes, die Anordnung umfassend:
eine langgestreckte Schraube (20), die im Wesentlichen vertikal in dem Aufzugsschacht angeordnet ist, wobei die Schraube ein Gewinde (22) umfasst, das um die Umfangsfläche angeordnet ist;
eine Mutter (30), die drehbar auf der langgestreckten Schraube (20) angeordnet ist, wobei die Mutter so angeordnet ist, dass sie die Aufzugsplattform trägt, wobei die Mutter ein oberes Ende (31) und ein unteres Ende (32) und ein Innengewinde (33) umfasst, das dem Gewinde auf der Schraube entspricht und sich zwischen dem oberen und dem unteren Ende der Mutter erstreckt; und
einen Elektromotor (40), der so angeordnet ist, dass er die Mutter dreht, um die Mutter und die Aufzugsplattform zwischen den verschiedenen Ebenen entlang der Schraube zu bewegen,
wobei die Last von der Aufzugsplattform durch eine nach unten gerichtete Flanke (34) des Gewindes (33) in der Mutter (30) und eine nach oben gerichtete Flanke (23) des Gewindes der Schraube (20) getragen wird, **dadurch gekennzeichnet, dass** die Schraube mindestens zwei miteinander verbundene Schraubenabschnitte (21) umfasst und dass das Gewinde (22) um die Umfangsfläche entlang der mindestens zwei Schraubenabschnitte (21) angeordnet ist; und dadurch, dass
ein Abschnitt (S) der nach unten gerichteten Flanke (34) des Gewindes (33) in der Mutter im oberen und/oder unteren Ende der Mutter so abgewinkelt ist, dass ein Zwischenraum zwischen der nach oben gerichteten Flanke (23) des Gewindes (22) der Schraube (20) und der nach unten gerichteten Flanke (34) des Gewindes (33) in der Mutter gebildet wird.

2. Anordnung nach Anspruch 1, wobei der Zwischenraum zwischen der nach oben gerichteten Flanke (23) des Gewindes der Schraube (20) und der nach unten gerichteten Flanke (34) des Gewindes (33) in der Mutter in Richtung vom oberen und/oder unteren Ende der Mutter verjüngt ist.

3. Anordnung nach Anspruch 1 oder 2, wobei sich der abgewinkelte Abschnitt der nach unten gerichteten Flanke (34) des Gewindes (33) in der Mutter über mindestens 1/32 des Umfangs der Mutter erstreckt.

4. Anordnung nach Anspruch 1 oder 2, wobei sich der abgewinkelte Abschnitt der nach unten gerichteten Flanke (34) des Gewindes (33) in der Mutter über mindestens 1/16 des Umfangs der Mutter erstreckt.

5. Anordnung nach Anspruch 1 oder 2, wobei sich der abgewinkelte Abschnitt der nach unten gerichteten Flanke (34) des Gewindes (33) in der Mutter über mindestens 1/8 des Umfangs der Mutter erstreckt.

6. Anordnung nach Anspruch 1 oder 2, wobei sich der abgewinkelte Abschnitt der nach unten gerichteten Flanke (34) des Gewindes (33) in der Mutter über mindestens 1/4 des Umfangs der Mutter erstreckt.

7. Anordnung nach Anspruch 1 oder 2, wobei sich der abgewinkelte Abschnitt der nach unten gerichteten Flanke (34) des Gewindes (33) in der Mutter über mindestens 1/2 des Umfangs der Mutter erstreckt.

8. Anordnung nach einem der vorhergehenden Ansprüche, wobei der Abstand (d) zwischen der nach oben gerichteten Flanke des Außengewindes der Schraube und der nach unten gerichteten Flanke des Gewindes in der Mutter im oberen und/oder unteren Ende der Mutter im Bereich von 0,04 mm bis 1,0 mm liegt.

9. Anordnung nach einem der vorhergehenden Ansprüche, wobei der abgewinkelte Abschnitt in der nach unten gerichteten Flanke des Gewindes in der Mutter im Wesentlichen gerade oder gekrümmt ist, so dass der Abstand zwischen der nach oben gerichteten Flanke des Außengewindes der Schraube und der nach unten gerichteten Flanke des Gewindes in der Mutter entlang des abgewinkelten Abschnitts in Richtung vom oberen und/oder unteren Ende der Mutter abnimmt.

10. Anordnung nach einem der vorhergehenden Ansprüche, wobei zwischen dem abgewinkelten Abschnitt und dem nach unten gerichteten Gewinde in der Mutter eine gekrümmte Übergangsfläche gebildet ist.

## Revendications

1. Dispositif destiné à déplacer une plateforme d'ascenseur (14) entre différents niveaux à l'intérieur d'un puits d'ascenseur, ledit dispositif comprenant :
une vis allongée (20) disposée substantiellement verticalement dans ledit puits d'ascenseur, ladite vis comprenant des filets (22) disposés autour de la surface périphérique ;
un écrou (30) disposé de façon rotative sur la vis allongée (20), ledit écrou étant conçu pour supporter la plateforme d'ascenseur, ledit écrou comprenant une extrémité supérieure (31) et une extrémité inférieure (32) et des filets intérieurs (33) correspondant aux filets sur la vis, s'étendant entre les extrémités supérieure et inférieure de l'écrou ; et
un moteur électrique (40) conçu pour faire tourner l'écrou afin de déplacer l'écrou, et la plateforme d'ascenseur, entre les différents niveaux le long de la vis,
dans lequel la charge de la plateforme d'ascenseur est supportée par un flanc (34) du filet (33) dans l'écrou (30), lequel est tourné vers le bas, et par un flanc (23) du filet de la vis (20), lequel est tourné vers le haut,
**caractérisé en ce que** ladite vis comprend au moins deux sections de vis (21) reliées entre elles et **en ce que** les filets (22) sont disposés autour de la surface périphérique le long des au moins deux sections de vis (21) ;
et **en ce qu'**une section (S) du flanc (34) du filet (33) dans l'écrou tourné vers le bas dans l'extrémité supérieure et/ou inférieure de l'écrou est coudée de manière à former un espace entre le flanc (23) du filet (22) de la vis (20) tourné vers le haut et le flanc (34) du filet (33) dans l'écrou tourné vers le bas.

2. Dispositif selon la revendication 1, dans lequel l'espace entre le flanc (23) du filet de la vis (20) tourné vers le haut et le flanc (34) du filet (33) de l'écrou tourné vers le bas est effilé dans la direction à partir de l'extrémité supérieure et/ou inférieure de l'écrou.

3. Dispositif selon la revendication 1 ou 2, dans lequel la section soudée du flanc (34) du filet (33) dans l'écrou tourné vers le bas s'étend le long d'au moins 1/32 de la circonférence de l'écrou.

4. Dispositif selon la revendication 1 ou 2, dans lequel la section coudée du flanc (34) du filet (33) dans l'écrou tourné vers le bas s'étend le long d'au moins 1/16 de la circonférence de l'écrou.

5. Dispositif selon la revendication 1 ou 2, dans lequel la section coudée du flanc (34) du filet (33) dans l'écrou tourné vers le bas s'étend le long d'au moins 1/8 de la circonférence de l'écrou.

6. Dispositif selon la revendication 1 ou 2, dans lequel la section coudée du flanc (34) du filet (33) dans l'écrou tourné vers le bas s'étend le long d'au moins 1/4 de la circonférence de l'écrou.

7. Dispositif selon la revendication 1 ou 2, dans lequel la section coudée du flanc (34) du filet (33) dans l'écrou tourné vers le bas s'étend le long d'au moins 1/2 de la circonférence de l'écrou.

8. Dispositif selon l'une quelconque des revendications précédentes, dans lequel la distance (d) entre le flanc du filet extérieur sur la vis tourné vers le haut et le flanc du filet dans l'écrou tourné vers le bas dans l'extrémité supérieure et/ou inférieure de l'écrou est comprise dans la plage de 0,04 mm à 1,0 mm.

9. Dispositif selon l'une quelconque des revendications précédentes, dans lequel la section soudée dans le flanc du filet dans l'écrou tourné vers le bas est substantiellement droite, ou courbe, de sorte que la distance entre le flanc du filet extérieur sur la vis tourné vers le haut et le flanc du filet dans l'écrou tourné vers le bas diminue le long de la section soudée dans la direction à partir de l'extrémité supérieure et/ou inférieure de l'écrou.

10. Dispositif selon l'une quelconque des revendications précédentes, dans lequel une surface de transition courbe est formée entre la section coudée et le filet dans l'écrou tourné vers le bas.
